# EUROPÄISCHE PATENTSCHRIFT

(11) **EP 3 623 235 B1**
(45) Veröffentlichungstag und Bekanntmachung des Hinweises auf die Patenterteilung: **20.07.2022**
(21) Anmeldenummer: 19190483.8
(22) Anmeldetag: 07.08.2019
(51) Int. Cl.: B60T 8/88

(54) **VERFAHREN ZUM BETRIEB EINES ASSISTENZSYSTEMS EINES KRAFTFAHRZEUGS**
METHOD FOR OPERATING AN ASSISTANCE SYSTEM OF A MOTOR VEHICLE
PROCÉDÉ DE FONCTIONNEMENT D'UN SYSTÈME D'AIDE D'UN VÉHICULE AUTOMOBILE

(30) Priorität: 12.09.2018 DE 102018215476
(43) Veröffentlichungstag der Anmeldung: 18.03.2020
(73) Patentinhaber: Audi AG, 85045 Ingolstadt (DE)
(72) Erfinder: Ernst, Herbert, 02906 Niesky (DE)

(56) Entgegenhaltungen:
- EP-A2- 0 379 669
- EP-A2- 1 219 489
- DE-A1- 3 611 822
- DE-A1- 10 107 455
- DE-A1- 10 359 875
- DE-A1-102014 221 901
- DE-A1-102015 110 965
- DE-A1-102015 209 565
- US-A1- 2016 311 419

## Beschreibung

Die Erfindung betrifft ein Verfahren zum Betrieb eines Assistenzsystems eines Kraftfahrzeugs. Ferner betrifft die Erfindung ein Assistenzsystem eines Kraftfahrzeugs und ein Kraftfahrzeug.

Kraftfahrzeuge weisen üblicherweise Bremssysteme auf, mittels derer eine Verzögerung des Kraftfahrzeugs erfolgt. Hierbei ist üblicherweise eine Bremsscheibe drehfest mittelbar an einem Rad des Kraftfahrzeugs befestigt. Bei einem Bremswunsch des Fahrers werden Bremsklötze gegen die Bremsscheibe bewegt und somit eine Reibung erhöht, was eine Drehgeschwindigkeit des Rades verringert. Der Bremswunsch des Fahrers wird üblicherweise mittels eines Bremspedals erfasst, welches üblicherweise hydromechanisch mit den Bremsklötzen verbunden ist. Zudem ist meist ein Bremskraftverstärker vorhanden, sodass zur Erreichung einer bestimmten Bremswirkung das Bremspedal lediglich mit einer vergleichsweise geringen Kraft betätigt werden muss.

Bei einer übermäßigen Krafteinwirkung ist es hierbei möglich, dass das Rad blockiert, was eine Bremswirkung verschlechtert. Auch ist in diesem Fall ein gezieltes Beeinflussen einer Fortbewegungsrichtung des Kraftfahrzeugs meist nicht mehr möglich. Zur Vermeidung hiervon sind beispielsweise Antiblockiersysteme bekannt, bei denen die Bremskraft kurzzeitig verringert wird, sodass das Rad kurzzeitig erneut freigegeben wird. Hierfür ist es erforderlich, dass zunächst der Radschlupf des Rads erfasst wird. Hierfür wird üblicherweise jedem der Räder des Kraftfahrzeugs ein Drehzahlsensor zugeordnet, und die mittels der Drehzahlsensoren erfassten Sensorsignale mit einer gemeinsamen Steuereinheit ausgewertet.

Sofern dieses System ausfällt, ist es für den Nutzer des Kraftfahrzeugs bei einem manuellen Betrieb auch weiterhin möglich mittels gezielter Änderung der Stellung des Bremspedals die Bremskraft abzuschwächen, sodass eine Blockade aufgehoben wird. Sofern das Kraftfahrzeug jedoch automatisiert bewegt werden soll, ist eine redundante Auslegung zur Überprüfung des Radschlupfs erforderlich. Bei einer derartigen redundanten Auslegung wären somit acht Sensoren und zwei Steuereinheiten erforderlich, was einen Verkabelungsaufwand und einen benötigten Bauraum vergrößert. Auch sind ein Gewicht und Herstellungskosten vergrößert.

Aus DE 10 2015 110 965 A1 und US 2016/0311419 A1 ist jeweils ein autonomes Fahrzeugsteuerungssubsystem offenbart. Dieses umfasst ein erstes und ein zweites Bremssteuermodul, die kommunikativ und elektrisch miteinander verbunden sind, und eine Mehrzahl an Raddrehzahlsensoren, die kommunikativ mit dem ersten Bremssteuermodul verbunden sind. Das erste Modul ist dazu programmiert, Raddrehzahldaten von den Raddrehzahlsensoren zu empfangen. Das zweite Modul ist dazu programmiert, die Raddrehzahldaten im Fall eines Fehlers im ersten Modul zu verarbeiten.

In EP 1 219 489 ist ein System zur Steuerung und/oder Überwachung eines wenigstens zwei Steuergeräte aufweisenden Steuergeräteverbundes offenbart. Dieses weist ein erstes Steuergerät und ein zweites Steuergerät (20) auf, wobei das erste Steuergerät mit Mitteln zur Durchführung seiner Steuerfunktion und zur Überwachung dieser Steuerfunktion, sowie mit Mitteln zur Überwachung der Steuerfunktion des zweiten Steuergeräts ausgebildet ist.

Der Erfindung liegt die Aufgabe zugrunde, ein besonders geeignetes Verfahren zum Betrieb eines Assistenzsystems eines Kraftfahrzeugs sowie ein besonders geeignetes Assistenzsystem eines Kraftfahrzeugs als auch ein besonders geeignetes Kraftfahrzeug anzugeben, wobei vorteilhafterweise eine Sicherheit erhöht ist, wobei zweckmäßigerweise Herstellungskosten verringert sind.

Hinsichtlich des Verfahrens wird diese Aufgabe durch die Merkmale des Anspruchs 1, hinsichtlich des Assistenzsystems durch die Merkmale des Anspruchs 7 und hinsichtlich des Kraftfahrzeugs durch die Merkmale des Anspruchs 11 erfindungsgemäß gelöst. Vorteilhafte Weiterbildungen und Ausgestaltungen sind Gegenstand der jeweiligen Unteransprüche.

Das Verfahren dient dem Betrieb eines Assistenzsystems eines Kraftfahrzeugs. Das Kraftfahrzeug ist beispielsweise ein Nutzkraftwagen. Besonders bevorzugt ist das Kraftfahrzeug jedoch ein Personenkraftwagen (PKW). Das Kraftfahrzeug weist für den Vortrieb beispielsweise einen Verbrennungsmotor, einen Elektromotor oder eine Kombination hieraus auf.

Das Assistenzsystem weist eine erste Steuereinheit und eine zweite Steuereinheit auf, die beispielsweise zueinander baugleich sind, sodass Gleichteile verwendet werden können. Somit sind Herstellungskosten reduziert und eine Lagerhaltung vereinfacht. Zudem umfasst das Assistenzsystem bevorzugt einen ersten Drehzahlsensor und einen zweiten Drehzahlsensor. Die beiden Drehzahlsensoren sind vorzugsweise zueinander baugleich, sodass wiederum Gleichteile verwendet werden können, was Herstellungskosten verringert und eine Lagerhaltung vereinfacht.

Der erste Drehzahlsensor dient der Erfassung einer Drehzahl eines ersten Rads, und der zweite Drehzahlsensor dient der Erfassung einer Drehzahl eines zweiten Rads. Hierfür sind die Drehzahlsensoren geeignet, insbesondere vorgesehen und eingerichtet. Insbesondere ist der erste Drehzahlsensor mit dem ersten Rad gekoppelt, und der zweite Drehzahlsensor ist mit dem zweiten Rad gekoppelt. Beispielsweise erfolgt die Erfassung der jeweiligen Drehzahl mittels einer Lichtschranke oder elektromagnetisch. Die Räder dienen zweckmäßigerweise dem Kontakt des Kraftfahrzeugs mit einer Ebene, insbesondere einem Boden, wie einer Fahrbahn mit einer Fahrspur. Sofern hierbei insbesondere eines der Räder angetrieben wird, wird das Kraftfahrzeug bewegt. Die Räder selbst umfassen beispielsweise mehrere Komponenten, insbesondere einen Reifen, eine Felgen und/oder weitere Komponenten und sind zweckmäßigerweise mittels eines Lagers bezüglich einer Karosserie oder eines Fahrwerks des Kraftfahrzeugs drehbar gelagert. Insbesondere ist dem ersten Rad lediglich der erste Drehzahlsensor und dem zweiten Rad lediglich der zweite Drehzahlsensor zugeordnet, sodass jedem Rad lediglich ein einziger Drehzahlsensor zugeordnet ist, was Herstellungskosten reduziert.

Der erste Drehzahlsensor ist an die erste Steuereinheit angeschlossen und somit mit dieser insbesondere signaltechnisch gekoppelt. Vorzugsweise erfolgt hierbei ein direkter Anschluss des ersten Drehzahlsensors an die Steuereinheit, beispielsweise mittels einer Leitung oder eines Kabels. Somit ist eine Datenrate zur Übertragung von Signalen zwischen dem ersten Drehzahlsensor und der ersten Steuereinheit erhöht, und eine Störung etwaiger über diese Leitung übertragener Signale ist im Wesentlichen unterbunden. Somit ist eine Sicherheit erhöht. Alternativ oder besonders bevorzugt in Kombination hierzu ist der zweite Drehzahlsensor direkt mittels einer weiteren Leitung mit der zweiten Steuereinheit signaltechnisch gekoppelt. Zumindest jedoch ist der zweite Drehzahlsensor an die zweite Steuereinheit angeschlossen.

Alternativ zur jeweiligen direkten signaltechnischen Kopplung, insbesondere mittels einer jeweils zugeordneten Leitung, erfolgt beispielsweise eine Einspeisung von Signalen mittels zumindest eines der Drehzahlsensoren in ein Bussystem, an das auch die erste und/oder zweite Steuereinheit angeschlossen ist. Somit erfolgt eine Datenübertragung zwischen dem jeweiligen Drehzahlsensor und der zugeordneten Steuereinheit über das Bussystem. Auf diese Weise sind ein Verkabelungsaufwand und somit ein Gewicht als auch Herstellungskosten reduziert.

Ferner ist die erste Steuereinheit signaltechnisch mit der zweiten Steuereinheit gekoppelt. Mit anderen Worten ist ein Austausch von Daten zwischen den beiden Steuereinheiten aufgrund der signaltechnischen Kopplung ermöglicht. Insbesondere erfolgt die Kopplung mittels einer Leitung, die zweckmäßigerweise lediglich für die signaltechnische Kopplung herangezogen wird. Hierbei sind die beiden Steuereinheiten beispielsweise zueinander beabstandet, was eine Sicherheit erhöht. Alternativ hierzu sind die beiden Steuereinheiten beispielsweise in einem gemeinsamen Gehäuse angeordnet, und die Kopplung erfolgt zum Beispiel intrinsisch, vorzugsweise mittels Leiterbahnen einer gemeinsamen Leiterplatte, oder die beiden Steuereinheiten sind mittels eines Steckers signaltechnisch miteinander verbunden. Somit ist eine Montage vereinfacht.

Das Assistenzsystem ist geeigneterweise ein Bremsregelsystem oder erfüllt im bestimmungsgemäßen Zustand zweckmäßigerweise die Aufgaben eines Bremsregelsystems. Zum Beispiel ist das Assistenzsystem ein Bestandteil eines Bremsregelsystems.

Das Verfahren sieht vor, dass mittels des ersten Drehzahlsensors ein erstes Sensorsignal erstellt wird. Das erste Sensorsignal korrespondiert hierbei zu einer Rotationsbewegung des ersten Rads und ist beispielsweise gleich der Drehgeschwindigkeit, also der Rotationsgeschwindigkeit, des ersten Rads, wobei diese insbesondere zeitlich veränderlich ist. Mit anderen Worten ist das erste Sensorsignal ein zeitlich veränderliches Signal. Auch wird mittels des zweiten Drehzahlsensors ein zweites Sensorsignal erstellt. Das zweite Sensorsignal weist vorzugsweise die gleiche Dimension wie das erste Sensorsignal auf und korrespondiert vorzugsweise zur Drehzahl des zweiten Rads. Aufgrund des Anschlusses des ersten Drehzahlsensors an die erste Steuereinheit, wird das erste Sensorsignal an die erste Steuereinheit geleitet. Ebenso wird das zweite Sensorsignal an die zweite Steuereinheit geleitet, sodass in der jeweiligen Steuereinheit das jeweilige Sensorsignal bereitsteht.

In einem weiten Arbeitsschritt wird bestimmt, ob ein Fehlerfall der ersten Steuereinheit oder der zweiten Steuereinheit vorliegt. Beispielsweise wird mittels der ersten Steuereinheit überprüft, ob die zweite Steuereinheit fehlerfrei arbeitet, und/oder mittels der zweiten Steuereinheit wird überprüft, ob die erste Steuereinheit fehlerfrei arbeitet. Zumindest jedoch wird mittels der Steuereinheiten jeweils gegenseitig überprüft, ob dort ein Fehlerfall vorliegt. Alternativ hierzu wird mittels einer zusätzlichen Komponente der Fehlerfall ermittelt. Hierbei wird insbesondere überprüft, ob an der jeweiligen Steuereinheit das jeweilige Sensorsignal erfasst und/oder verarbeitet werden kann. Zweckmäßigerweise wird kontinuierlich oder zumindest periodisch überprüft, ob der der jeweilige Fehlerfall vorliegt, beispielsweise alle 10 Sekunden, jede Minute, alle 5 Minuten oder jede Stunde. Alternativ hierzu erfolgt vorzugsweise zumindest bei Start des Kraftfahrzeugs eine Überprüfung auf den Fehlerfall.

Sofern kein Fehlerfall vorliegt, wird mittels der zweiten Steuereinheit das zweite Sensorsignal an die erste Steuereinheit geleitet, sodass in der ersten Steuereinheit sowohl das erste Sensorsignal als auch das zweite Sensorsignal vorliegen. Mittels der ersten Steuereinheit wird aus dem ersten Sensorsignal ein Radschlupf des ersten Rads bestimmt. Insbesondere wird das erste Sensorsignal mit einem Beschleunigungswert des Kraftfahrzeugs verglichen, wobei der Beschleunigungswert zweckmäßigerweise mittels eines weiteren Sensors erfasst wird. Zum Beispiel wird überprüft, ob das erste Rad blockiert, wobei das Kraftfahrzeug auch weiterhin mit einer Geschwindigkeit bewegt wird, die verschieden von 0 ("null") km/h ist. Ferner wird mittels der ersten Steuereinheit aus dem zweiten Sensorsignal ein Radschlupf des zweite Rads bestimmt, also insbesondere ob das zweite Rad blockiert. Vorzugsweise wird hierbei ebenfalls der etwaige Beschleunigungssensor herangezogen. Zusammenfassend erfolgt mittels der ersten Steuereinheit die Bestimmung des Radschlupfs jedes Rades, wobei dies anhand der hierfür direkt gemessen Sensorsignale erfolgt. Da lediglich die erste Steuereinheit hierfür verwendet wird, unterscheiden sich die Bestimmungen der Radschlupfe nicht, sodass ein etwaiger systematischer Fehler, beispielsweise aufgrund von Fehlertoleranzen, bei beiden Radschlupfen auftritt.

Dann, wenn ein Fehlerfall der ersten Steuereinheit vorliegt, ist die Bestimmung des Radschlupfs mittels der ersten Steuereinheit nicht mehr möglich. Auch ist ein Leiten des ersten Sensorsignals zu der zweiten Steuereinheit aufgrund des Fehlerfalls der ersten Steuereinheit nicht möglich. In diesem Fall wird mittels der zweiten Steuereinheit aus dem zweiten Sensorsignal der Radschlupf des zweiten Rads bestimmt. Hierbei wird insbesondere der Radschlupf direkt aus dem zweiten Sensorsignal bestimmt, wobei vorzugsweise ähnliche Routinen herangezogen werden, wie bei dem ersten Steuereinheit, sofern der Fehlerfall nicht vorliegt. Mittels der zweiten Steuereinheit wird zudem der Radschlupf des ersten Rads ermittelt, wofür geeigneterweise zumindest das zweite Sensorsignal herangezogen wird. Erfindungsgemäß wird der Radschlupf des ersten Rads anhand eines theoretischen Models berechnet, und zwar anhand eines funktionalen Zusammenhangs mit dem zweiten Sensorsignal ermittelt.

Dann, wenn ein Fehlerfall der zweiten Steuereinheit vorliegt, ist ein Leiten des zweiten Sensorsignals an die erste Steuereinheit nicht möglich, sodass in der ersten Steuereinheit lediglich das erste Sensorsignal vorhanden ist. Mit anderen Worten ist aufgrund des Fehlerfalls der zweiten Steuereinheit das zweite Sensorsignal nicht mehr in der ersten Steuereinheit bekannt. Mittels der ersten Steuereinheit wird aus dem ersten Sensorsignal der Radschlupf des ersten Rads bestimmt, wobei dies vorzugsweise in gleicher Weise erfolgt, wie wenn kein Fehlerfall der zweiten Steuereinheit vorliegen würde. Zudem wird anhand des ersten Sensorsignals der Radschlupf des zweiten Rads ermittelt. Hierfür wird erfindungsgemäß ein theoretisches Modell herangezogen und wird der Radschlupf des zweiten Rads anhand eines funktionalen Zusammenhangs zu dem ersten Sensorsignal ermittelt. Aufgrund des Verfahrens ist eine redundante Bestimmung der jeweiligen Radschlupfe ermöglicht, wobei nicht sämtliche einzelnen Komponenten des Assistenzsystems doppelt vorhanden sein müssen. Somit sind Herstellungskosten verringert, wobei dennoch eine Sicherheit erhöht ist.

Vorzugsweise werden die jeweils erstellten Radschlupfe zu Regelung des jeweiligen Radschlupfs herangezogen, wofür geeigneterweise eine Einstellung einer Bremse und/oder eines Motors, wie eines Verbrennungsmotors oder eines Elektromotors, verändert wird. Insbesondere ist das Assistenzsystem ein Bestandteil eines Kraftfahrzeugs, das automatisiert, insbesondere hochautomatisiert, fortbewegt wird. Hierbei erfolgt zum Beispiel keine Überprüfung oder Beeinflussung eines Radschlupfs durch einen Benutzer, insbesondere mittels einer Betätigung eines Bremspedals oder eine Änderung einer Betätigung eines Bremspedals, sodass eine redundante Auslegung erforderlich ist. Beispielsweise ist die erste Steuereinheit leistungsfähiger ausgestaltet als die zweite Steuereinheit. Im Normalbetrieb, also wenn kein Fehlerfall vorliegt, erfolgt die Ermittlung des Radschlupfs mittels der ersten Steuereinheit, sodass der Radschlupf vergleichsweise in kurzer Zeit bestimmt wird. Die zweite Steuereinheit wird lediglich im Fehlerfall herangezogen und somit vergleichsweise selten verwendet. Folglich kann diese vergleichsweise leistungsschwach ausgestaltet werden, was Herstellungskosten verringert. Mittels der zweiten Steuereinheit erfolgt insbesondere lediglich eine rudimentäre Bestimmung/Ermittlung des Radschlupfs, wobei zum Beispiel ein zeitlicher Verlauf des Radschlupfs eine größere Granularität aufweist.

Zum Beispiel wird das Verfahren lediglich dann durchgeführt, wenn das Kraftfahrzeug bewegt, was vorzugsweise mittels des etwaigen weiteren Beschleunigungssensors bestimmt wird, oder anhand beispielsweise eines GPS-Signals.

Beispielsweise wird zur Ermittlung des Radschlupfs, also zur Berechnung des jeweiligen Radschlupfs des anhand des jeweils anderen Sensorsignals, eine Formel herangezogen und der Radschlupf somit berechnet. Besonders bevorzugt jedoch erfolgt die Ermittlung mittels eines Kennfelds. Auf diese Weise sind vergleichsweise geringe Hardwareressourcen erforderlich, was Herstellungskosten weiter reduziert. Auch ist eine Zeit zur Ermittlung des jeweiligen Radschlupfs verringert, was eine Sicherheit erhöht. Insbesondere ist das Kennfeld auf den Typ des Kraftfahrzeugs angepasst oder auf das jeweilige Kraftfahrzeug selbst. Beispielsweise erfolgt die Befüllung des Kennfelds mittels eines Prüfstands bei Fertigung des Kraftfahrzeugs. Das Kennfeld ist insbesondere zweidimensional, sodass jedem Sensorsignal jeweils lediglich ein einziger Radschlupf zugeordnet ist. Besonders bevorzugt jedoch ist das Kennfeld mehrdimensional ausgestaltet, sodass der jeweilige Radschlupf zusätzlich zu dem Sensorsignal anhand von weiteren Faktoren ermittelt wird. Folglich ist eine Sicherheit erhöht.

Insbesondere erfolgt die Ermittlung des Radschlupfs anhand einer Radaufstandskraft. Hierbei wird zweckmäßigerweise die Radaufstandskraft, also insbesondere die Radlast, des jeweiligen Rads, für den der Radschlupf ermittelt wird, herangezogen. Insbesondere wird hierfür ein Gewichtssensor verwendet, die den jeweiligen Rads oder zumindest der Achse des Kraftfahrzeugs, in das Rad zugeordnet ist, zugeordnet ist. Der Sensor ist beispielsweise ein Beschleunigungssensor. Mit anderen Worten wird die Radaufstandskraft für das jeweilige Rad zunächst erfasst und an die jeweilige Steuereinheit geleitet. Aufgrund der Berücksichtigung der Radaufstandskraft wird eine Reibung des Rads mit dem Untergrund berücksichtigt, sodass eine Ermittlung des Radschlupfs verbessert ist. Insbesondere wird bei der Ermittlung des jeweiligen Radschlupfs bei dem theoretischen Modell, insbesondere der Gleichung und/oder des Kennfelds, angenommen, dass das Rad, für den der Radschlupf ermittelt werden soll, den gleichen Fahrbahneigenschaften, den gleichen Untergrundeigenschaften und/oder der gleichen Fahrbahnbeschaffenheit ausgesetzt ist, wie das Rad, für den der Radschlupf bestimmt, also insbesondere direkt gemessen, wird.

Beispielsweise wird zur Ermittlung des Radschlupfs zusätzlich ein weiterer, auf das Rad wirkender Parameter herangezogen, der insbesondere mittels eines weiteren Sensors bestimmt wird. Vorzugsweise wird zur Ermittlung des jeweiligen Radschlupfs die jeweilige Radaufstandskraft, also insbesondere die jeweilige Radlast, herangezogen. Diese wird zweckmäßigerweise mittels eines geeigneten Sensors, beispielsweise eines Gewichtssensors, für das jeweilige Rad oder zumindest für eine Achse, der das jeweilige Rad zugeordnet ist, gemessen. Somit ist eine Ermittlung des jeweiligen Radschlupfs präziser, was eine Sicherheit erhöht. Zusammenfassend wird zusätzlich eine auf das jeweilige Rad wirkende Kraft oder zumindest ein den Zustand des jeweiligen Rads kennzeichnender Parameter, nämlich zweckmäßigerweise die Radlast, berücksichtigt, für das der jeweilige Radschlupf ermittelt wird.

Alternativ oder besonders bevorzugt in Kombination hierzu erfolgt die Ermittlung des Radschlupfs in Abhängigkeit einer Gierrate des Kraftfahrzeugs. Somit erfolgt bei der Ermittlung des Radschlupfs eine Berücksichtigung einer Zustandsgröße des Kraftfahrzeugs. Die Gierrate ist insbesondere proportional zu einer Querbeschleunigung, die beispielsweise aufgrund einer Schleuderbewegung oder Kurvenfahrt des Kraftfahrzeugs hervorgerufen wird. Besonders bevorzugt erfolgt die Ermittlung in Abhängigkeit eines Lenkwinkels, insbesondere somit eines Lenkeinschlag eines Rads des Kraftfahrzeugs, beispielsweise des ersten Rads oder des zweiten Rads, sofern mittels des jeweiligen Rads eine Fortbewegungsrichtung des Kraftfahrzeugs eingestellt wird. Aufgrund der Ermittlung des Radschlupfs in Abhängigkeit des Lenkwinkels wird die gewünschte Fahrtrichtung des Kraftfahrzeugs berücksichtigt, insbesondere eine Kurvenfahrt, was zu unterschiedliche wirkenden Kräften auf die jeweiligen Räder führt, was somit einen unterschiedlichen Radschlupf bedingt. Vorzugsweise auf wird sowohl die Gierrate als auch der Lenkwinkel zur Ermittlung des Radschlupfs herangezogen, also die gewünschte Bewegungsrichtung oder eine hierzu korrespondierende Größe und die tatsächliche Bewegungsrichtung des Kraftfahrzeugs oder eine hierzu korrespondierende Größe. Somit ist eine vergleichsweise genaue Ermittlung des Radschlupfs ermöglicht. Vorzugsweise wird hierbei das Kennfeld verwendet, und der Radschlupf ist insbesondere in Abhängigkeit der Gierrate, des Lenkwinkels und/oder der Radaufstandskraft und in Abhängigkeit des Sensorsignals hinterlegt, das dem jeweils anderen Rad zugeordnet ist.

Beispielsweise wird anhand des Radschlupfs des ersten Rads ein erstes Bremssignal für das erste Rad erstellt. Alternativ oder besonders bevorzugt Kombination hierzu wird anhand des Radschlupfs des zweiten Rads ein zweites Bremssignal für das zweite Rad erstellt. Geeigneterweise erfolgt eine Ansteuerung einer dem jeweiligen Rad zugeordneten Bremse mittels des jeweiligen Bremssignals. Hierbei wird beispielsweise ein Bremssignal neu erstellt oder ein bereits bestehendes Bremssignal modifiziert. Insbesondere wird anhand des Bremssignals eine Bremse gelöst, sodass eine Blockierung aufgehoben wird. Alternativ oder in Kombination hierzu wird anhand des jeweiligen Bremssignals ein Bremsdruck erhöht. Somit erfolgen eine verbesserte Reibwertausnutzung und daher auch eine verstärkte Verzögerung. Das Assistenzsystem wirkt hierbei somit zumindest teilweise als Antiblockiersystem. Alternativ hierzu erfolgt beispielsweise bei der Beschleunigung des Kraftfahrzeugs eine Erstellung des Bremssignals, sodass ein Radschlupf verringert ist. Das Assistenzsystem ist somit insbesondere ein Bestandteil einer Antriebsschlupfregelung. Vorzugsweise ist das Assistenzsystem ein Bestandteil einer Fahrdynamikregelung oder der mittels des Assistenzsystems erstellte Radschlupf wird an die Fahrdynamikregelung bei Betrieb geleitet. Vorzugsweise ist das Assistenzsystem ein Bremssystem oder ein Bestandteil eines Bremssystems. Das Assistenzsystem dient besonders bevorzugt hierbei der Bestimmung des jeweiligen Radschlupfs.

Besonders bevorzugt weist das Assistenzsystem einen dritten Drehzahlsensor zur Erfassung einer Drehzahl eines dritten Rads und einen vierten Drehzahlsensor zur Erfassung einer Drehzahl eines vierten Rads auf. Hierfür sind die Drehzahlsensoren geeignet, insbesondere vorgesehen und eingerichtet. Vorzugsweise sind sämtliche Drehzahlsensoren zueinander baugleich, was Herstellungskosten reduziert. Der dritte Drehzahlsensor ist an die erste Steuereinheit angeschlossen und somit mit dieser signaltechnisch gekoppelt, zweckmäßigerweise in gleicher Weise wie der erste Drehzahlsensor. Der vierte Drehzahlsensor ist an die zweite Steuereinheit angeschlossen und somit mit dieser signaltechnisch gekoppelt, zweckmäßigerweise in gleicher Weise wie der zweite Drehzahlsensor. Vorzugsweise sind der dritte Drehzahlsensor mit dem dritten Rad und der vierte Drehzahlsensor mit dem vierten Rad gekoppelt.

Bei Betrieb wird mittels des dritten Drehzahlsensors ein drittes Sensorsignal und/oder mittels des vierten Drehzahlsensors ein viertes Sensorsignal erstellt. Geeigneterweise weist hierbei das Kraftfahrzeug lediglich die vier Räder auf, mittels derer ein Kontakt zu einer Fahrspur erstellt ist. Ein Radschlupf des dritten Rads und ein Radschlupf des vierten Rads werden erstellt, also entweder ermittelt oder bestimmt. Insbesondere wird der Radschlupf des dritten Rads in gleicher Weise wie der Radschlupf des ersten Rads und der Radschlupf des vierten Rads in gleicher Weise wie der Radschlupf des zweiten Rads erstellt. Mit anderen Worten wird der Radschlupf des dritten Rads bestimmt, wenn der Radschlupf des ersten Rads bestimmt wird, insbesondere mit der gleichen Steuereinheit, und der Radschlupf des dritten Rads wird ermittelt, wenn der Radschlupf des ersten Rads ermittelt wird, insbesondere mit der jeweils gleichen Steuereinheit. Ebenso wird vorzugsweise der Radschlupf des vierten Rads bestimmt, wenn der Radschlupf des zweiten Rads bestimmt wird, zweckmäßigerweise mit der jeweils gleichen Steuereinheit. Vorzugsweise wird der Radschlupf des vierten Rads ermittelt, wenn der Radschlupf des zweiten Rads ermittelt wird, vorzugsweise mit der gleichen Steuereinheit. Zweckmäßigerweise wird dann, wenn kein Fehlerfall vorliegt mittels der zweite Steuereinheit das vierte Sensorsignal an die erste Steuereinheit geleitet.

Das Assistenzsystems ein Bestandteil des Kraftfahrzeugs und weist eine erste Steuereinheit und eine zweite Steuereinheit auf, die signaltechnisch miteinander gekoppelt sind. Zudem umfasst das Assistenzsystem einen ersten Drehzahlsensor und einen zweiten Drehzahlsensor. Der erste Drehzahlsensor dient der Erfassung einer Drehzahl eines ersten Rads. Hierfür ist der erste Drehzahlsensor geeignet, insbesondere vorgesehen und eingerichtet. Zweckmäßigerweise ist im Montagezustand der erste Drehzahlsensor mit dem ersten Rad gekoppelt. Der zweite Drehzahlsensor dient der Erfassung einer Drehzahl eines zweiten Rads und ist hierfür geeignet, zweckmäßigerweise vorgesehen und eingerichtet. Im Montagezustand ist der zweite Drehzahlsensor zweckmäßigerweise mit dem zweiten Rad gekoppelt.

Der erste Drehzahlsensor ist an die erste Steuereinheit angeschlossen, insbesondere direkt signaltechnisch mit dieser gekoppelt, vorzugsweise mittels einer hierfür geeigneten Leitung. Zweckmäßigerweise dient die Leitung lediglich der signaltechnischen Kopplung des ersten Drehzahlsensors mit der ersten Steuereinheit. Der zweite Drehzahlsensor ist an die zweite Steuereinheit angeschlossen und somit insbesondere signaltechnisch mit dieser direkt gekoppelt. Hierfür wird vorzugsweise eine explizit hierfür vorgesehene geeignete Leitung verwendet.

Das Assistenzsystem ist gemäß einem Verfahren betrieben, bei dem mittels des ersten Drehzahlsensors ein erstes Sensorsignal mittels des zweiten Drehzahlsensors ein zweites Sensorsignal erstellt wird. Ferner wird bestimmt, ob ein Fehlerfall der ersten Steuereinheit oder der zweiten Steuereinheit vorliegt. Dann, wenn kein Fehlerfall vorliegt, wird mittels der zweiten Steuereinheit das zweite Sensorsignal an die erste Steuereinheit geleitet, und mittels der ersten Steuereinheit wird aus dem ersten Sensorsignal ein Radschlupf des ersten Rads und aus dem zweiten Sensorsignal ein Radschlupf des zweiten Rads bestimmt. Dann wenn ein Fehlerfall der ersten Steuereinheit vorliegt, wird mittels der zweiten Steuereinheit anhand des zweiten Sensorsignals der Radschlupf des ersten Rads ermittelt, und aus dem zweiten Sensorsignal wird der Radschlupf des zweiten Rads bestimmt. Dann, wenn ein Fehlerfall der zweiten Steuereinheit vorliegt, wird mittels der ersten Steuereinheit aus dem ersten Sensorsignal der Radschlupf des ersten Rads bestimmt, und anhand des ersten Sensorsignals wird der Radschlupf des zweiten Rads ermittelt.

Insbesondere wird das Verfahren mittels der beiden Steuereinheiten durchgeführt. Alternativ hierzu ist ein zusätzliches Steuergerät vorhanden, mittels dessen beispielsweise die beiden Steuereinheiten entsprechend des Verfahrens gesteuert sind. Vorzugsweise weist die zweite Steuereinheit eine Durchleitungseinheit auf, mittels derer ein Durchleiten des zweiten Sensorsignals erfolgt, sofern kein Fehlerfall vorliegt. Die Durchleitungseinheit ist beispielsweise als ASIC ausgestaltet, was eine Fehleranfälligkeit reduziert und somit eine Sicherheit erhöht.

Besonders bevorzugt weist das Assistenzsystem einen dritten Drehzahlsensor zur Erfassung einer Drehzahl eines dritten Rads auf. Hierfür ist der dritte Drehzahlsensor geeignet, insbesondere vorgesehen und eingerichtet, und der dritte Drehzahlsensor ist zweckmäßigerweise mit dem dritten Rad gekoppelt. Zudem umfasst das Assistenzsystem bevorzugt einen vierten Drehzahlsensor zur Erfassung einer Drehzahl eines vierten Rads. Hierfür ist der vierte Drehzahlsensor geeignet, insbesondere vorgesehen und eingerichtet. Vorzugsweise ist der vierte Drehzahlsensor mit dem vierten Rad gekoppelt.

Der dritte Drehzahlsensor ist an die erste Steuereinheit angeschlossen, und der vierte Drehzahlsensor ist an die zweite Steuereinheit angeschlossen.

Bei Betrieb wird mittels des dritten Drehzahlsensors ein drittes Sensorsignal und mittels des vierten Drehzahlsensors ein viertes Sensorsignal erstellt. Dann, wenn kein Fehlerfall vorliegt, wird mittels der zweiten Steuereinheit das vierte Sensorsignal an die erste Steuereinheit geleitet, und mittels der ersten Steuereinheit wird aus dem dritten Sensorsignal ein Radschlupf des dritten Rads und aus dem vierten Sensorsignal ein Radschlupf des vierten Rads bestimmt. Dann wenn ein Fehlerfall der ersten Steuereinheit vorliegt, wird mittels der zweiten Steuereinheit anhand des zweiten und/oder vierten Sensorsignals der Radschlupf des ersten Rads ermittelt. Alternativ oder in Kombination hierzu wird mittels in der zweiten Steuereinheit anhand des zweiten und/oder vierten Sensorsignal der Radschlupf des dritten Rads ermittelt. Aus dem vierten Sensorsignal wird zudem der Radschlupf des vierten Rads bestimmt. Dann, wenn ein Fehlerfall der zweiten Steuereinheit vorliegt, wird mittels der ersten Steuereinheit aus dem dritten Sensorsignal der Radschlupf des dritten Rads bestimmt, und anhand des ersten Sensorsignal und/oder des dritten Sensorsignal der Radschlupf des zweiten Rads bestimmt. Alternativ oder besonders bevorzugt in Kombination hierzu wird anhand des ersten Sensorsignal und/oder des dritten Sensorsignal der Radschlupf des vierten Rads ermittelt. Aufgrund der zusätzlichen Drehzahlsensoren ist eine Sicherheit weiter erhöht.

Insbesondere weist das Kraftfahrzeug lediglich die vier Räder auf, und jedem der Räder ist jeweils lediglich ein einziger Drehzahlsensor zugeordnet, entweder der erste, zweite, dritte oder vierte Drehzahlsensor. Somit sind Herstellungskosten reduziert, wobei aufgrund der beiden Steuereinheiten eine Redundanz gegeben ist, sodass eine Sicherheit erhöht ist.

Beispielsweise sind der erste Drehzahlsensor und der dritte Drehzahlsensor einer gemeinsamen Achse des Kraftfahrzeugs zugeordnet, beispielsweise der Vorderachse oder der Hinterachse. Somit ist eine Verkabelung vereinfacht. Geeigneterweise sind hierbei der zweite Drehzahlsensor und der vierte Drehzahlsensor ebenfalls einer gemeinsamen Achse des Kraftfahrzeugs zugeordnet, insbesondere zu der komplementären Achse, der der erste Drehzahlsensor und der dritte Drehzahlsensor zugeordnet sind. Somit ist eine Verkabelung vereinfacht, und Herstellungskosten sowie ein Gewicht sind folglich verringert.

In einer Alternative hierzu sind der erste Drehzahlsensor und der dritte Drehzahlsensor einer gemeinsamen Seite des Kraftfahrzeugs zugeordnet, beispielsweise der Fahrerseite oder der Beifahrerseite. Somit sind der erste Drehzahlsensor und der dritte Drehzahlsensor unterschiedlichen Achsen zugeordnet. Besonders bevorzugt ist hierbei der zweite Drehzahlsensor und der vierte Drehzahlsensor der komplementären Seite des Kraftfahrzeugs zugeordnet und folglich auch unterschiedlichen Achsen. Daher kann auch bei Ausfall einer der Steuereinheiten der Radschlupf an zweien der Achsen bestimmt werden, was eine Sicherheit erhöht und eine Ermittlung der jeweils verbleibenden Radschlupfs vereinfacht. Zudem ist eine Berücksichtigung einer Radaufstandskraft verbessert, insbesondere sofern diese zur Ermittlung des jeweiligen Radschlupfs herangezogen wird.

In einer weiteren Alternative sind der erste Drehzahlsensor und der dritte Drehzahl unterschiedlichen Seiten und unterschiedlichen Achsen des Kraftfahrzeugs zugeordnet. Beispielsweise ist der erste Drehzahlsensor einem vorderen linken und der dritte Drehzahlsensor einem hinteren rechten Rad zugeordnet. Folglich sind auch der zweite Drehzahlsensor und der vierte Drehzahlsensor unterschiedlichen Achsen und unterschiedlichen Seiten des Kraftfahrzeugs zugeordnet. Aufgrund einer derartigen Überkreuzanordnung ist bei Ausfall einer der Steuereinheiten dennoch jeweils ein Sensorsignal für jede der Achsen und jede der Seiten des Kraftfahrzeugs vorhanden, was eine Ermittlung der verbleibenden Radschlupfe verbessert und folglich eine Sicherheit erhöht.

Das Kraftfahrzeug weist ein erstes Rad und ein zweites Rad auf, zweckmäßigerweise ein drittes Rad und ein viertes Rad. Mittels der Räder erfolgt insbesondere ein Kontakt mit einer Umgebung, zweckmäßigerweise einem Boden. Das Kraftfahrzeug ist landgebunden und vorzugsweise unabhängig von Schienen oder dergleichen bewegt war. Beispielsweise ist das Kraftfahrzeug ein Personenkraftwagen (Pkw) oder ein Nutzkraftwagen, wie ein Lastkraftwagen (Lkw) oder Bus. Insbesondere ist das Kraftfahrzeug geeignet, insbesondere vorgesehen und eingerichtet, autonom bewegt zu werden, insbesondere automatisiert, wobei vorzugsweise ein Automatisierungslevel größer als 3 erreicht wird. Das Kraftfahrzeug umfasst ein Assistenzsystem mit einer ersten Steuereinheit und mit einer zweiten Steuereinheit. Ein erster Drehzahlsensor zur Erfassung einer Drehzahl des ersten Rads ist an die erste Steuereinheit angeschlossen, und ein zweiter Drehzahlsensor zur Erfassung einer Drehzahl des zweiten Rads ist an die zweite Steuereinheit angeschlossen. Die erste Steuereinheit ist signaltechnisch mit der zweiten Steuereinheit gekoppelt.

Das Assistenzsystem ist gemäß einem Verfahren betrieben, bei dem mittels des ersten Drehzahlsensors ein erstes Sensorsignal und mittels des zweiten Drehzahlsensors ein zweites Sensorsignal erstellt wird, und bei dem bestimmt wird, ob ein Fehlerfall der ersten Steuereinheit oder der zweiten Steuereinheit vorliegt. Dann, wenn kein Fehlerfall vorliegt, wird mittels der zweiten Steuereinheit das zweite Sensorsignal an die erste Steuereinheit geleitet, und mittels der ersten Steuereinheit wird aus dem ersten Sensorsignal ein Radschlupf des ersten Rads und aus dem zweiten Sensorsignal ein Radschlupf des zweiten Rads bestimmt. Dann, wenn ein Fehlerfall der ersten Steuereinheit vorliegt, wird mittels der zweiten Steuereinheit anhand des zweiten Sensorsignals der Radschlupf des ersten Rads ermittelt und aus dem zweiten Sensorsignal der Radschlupf des zweiten Rads bestimmt. Dann, wenn ein Fehlerfall der zweiten Steuereinheit vorliegt, wird mittels der ersten Steuereinheit aus dem ersten Sensorsignal der Radschlupf des ersten Rads bestimmt und anhand des ersten Sensorsignals der Radschlupf des zweiten Rads ermittelt.

Das Assistenzsystem ist geeignet, insbesondere vorgesehen und eingerichtet, das Verfahren durchzuführen. Hierfür weist das Assistenzsystem zweckmäßigerweise ein geeignetes Steuergerät auf, mittels dessen die Verfahrensschritte durchgeführt werden. Alternativ hierzu wird das Verfahren insbesondere mittels der ersten und/oder der zweiten Steuereinheit durchgeführt.

Vorzugsweise umfasst das Kraftfahrzeug ein Bremssystem, das beispielsweise ein mechanisch entkoppeltes Bremssystem ist. Das umfasst eine Bremse oder zumindest eine Ansteuerleitung für eine Bremse. Vorzugsweise umfasst das Bremssystem eine Scheibenbremse oder eine Trommelbremse. Alternativ ist die Bremse eine elektromotorische Bremse, also insbesondere ein Generator und/oder Rekuperator. Besonders bevorzugt weist das Bremssystem eine Anzahl derartiger Bremsen auf, wobei geeigneterweise jedem Rad des Kraftfahrzeugs jeweils eine Bremse zugeordnet ist. Geeigneterweise wird das Bremssystem mittels des Assistenzsystems gesteuert/geregelt. Hierbei dient insbesondere der jeweilige Radschlupf als Eingangsgrößen für das Bremssystem. Alternativ hierzu ist das Assistenzsystem zweckmäßigerweise ein Bestandteil des Bremssystems.

Die im Zusammenhang mit dem Verfahren beschriebenen Vorteile und Weiterbildungen sind sinngemäß auch auf das Assistenzsystem /Kraftfahrzeug zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug mit einem Assistenzsystem, das eine erste Steuereinheit und eine zweite Steuereinheit aufweist,
- Fig. 2: ein Verfahren zum Betrieb des Assistenzsystems, und
- Fig. 3: eine alternative Ausgestaltungsform des Assistenzsystems gemäß Fig. 1.

Einander entsprechende Teile sind in allen Figuren mit den gleichen Bezugszeichen versehen.

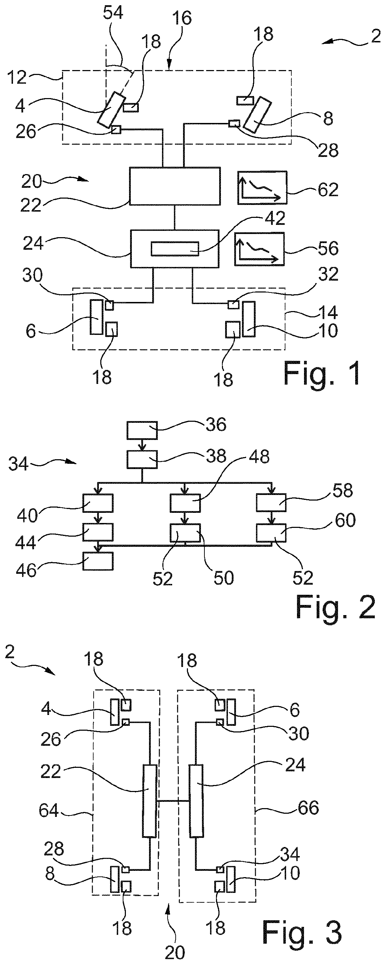

In Figur 1 ist schematisch vereinfacht ein Kraftfahrzeug 2 mit einem ersten Rad, einem zweiten Rad 6, einem dritten Rad 8, und einem vierten Rad 10 gezeigt. Das erste Rad 4 und das dritte Rad 8 sind einer Vorderachse 12 und das zweite Rad 6 und das vierte Rad 10 einer Hinterachse 14 zugeordnet. Das Kraftfahrzeug 2 weist lediglich diese zwei Achsen 12 und 14 auf und ist ein Personenkraftwagen (Pkw).

Ferner weist das Kraftfahrzeug 2 ein Bremssystem 16 mit vier Bremsen 18 auf, wobei jedem der Räder 4, 6, 8, 10 jeweils eine der Bremsen 18 zugeordnet ist. Mittels der Bremsen 18 wird bei entsprechender Ansteuerung eine Drehgeschwindigkeit des jeweiligen Rads 4, 6, 8, 10 verringert oder dieses gegebenenfalls blockiert. Zudem weist das Bremssystem 16 ein Assistenzsystem 20 auf, das der Bestimmung eines Radschlupfs des ersten, zweiten, dritten und vierten Rads 4, 6, 8, 10 dient. Das Assistenzsystem 20 weist eine erste Steuereinheit 22 und eine zweite Steuereinheit 24 auf, die signaltechnisch miteinander gekoppelt sind.

Ferner weist das Assistenzsystem 20 einen ersten Drehzahlsensor 26 auf, der der Erfassung der Drehzahl des ersten Rads 4 dient, und der an die erste Steuereinheit 22 angeschlossen ist. Ferner umfasst das Assistenzsystem 20 einen dritten Drehzahlsensor 28, der der Erfassung der Drehzahl des dritten Rads 8 dient, und der ebenfalls an die erste Steuereinheit 22 angeschlossen ist. Somit sind der erste Drehzahlsensor 26 und der dritte Drehzahlsensor 28 signaltechnisch direkt mit der ersten Steuereinheit 22 gekoppelt. Das Assistenzsystem 20 umfasst zudem einen zweiten Drehzahlsensor 30, der der Erfassung der Drehzahl des zweiten Rads 6 dient, und der an die zweite Steuereinheit 24 angeschlossen ist. Auch umfasst das Assistenzsystem 20 einen vierten Drehzahlsensoren 32, der der Erfassung der Drehzahl des vierten Rads 10 dient, und der an die zweite Steuereinheit 24 angeschlossen ist. Die Drehzahlsensoren 26, 28, 30, 32 sind zueinander baugleich und mit dem jeweiligen Rad 4, 6, 8, 10 gekoppelt. Aufgrund der Anordnung sind der erste Drehzahlsensor 26 und der dritte Drehzahlsensor 28 einer gemeinsamen Achse, nämlich der Vorderachse 12, des Kraftfahrzeugs 2 zugeordnet.

Das Assistenzsystem 20 ist gemäß einem Verfahren 34 betrieben, das in Figur 2 gezeigt ist. In einem ersten Arbeitsschritt 36 wird mittels des ersten Drehzahlsensors 26 ein erstes Sensorsignal und mittels des dritten Drehzahlsensors 28 ein drittes Sensorsignal erstellt. Aufgrund des Anschlusses an die erste Steuereinheit 22 werden die Sensorsignale an die erste Steuereinheit 22 geleitet und stehen somit dort zur Verfügung. Ferner wird mittels des zweiten Drehzahlsensors 30 ein zweites Sensorsignal und mittels des vierten Drehzahlsensors 32 ein viertes Sensorsignal erstellt, die aufgrund der signaltechnischen Kopplung mit der zweiten Steuereinheit 24 bei dieser zur Verfügung stehen. Die Sensorsignale entsprechen der Drehzahl des jeweiligen Rads 4, 6, 8, 10.

In einem sich anschließenden zweiten Arbeitsschritt 38 wird bestimmt, ob ein Fehlerfall der ersten Steuereinheit 22 oder der zweiten Steuereinheit 24 vorliegt. Insbesondere wird dabei überprüft, ob die jeweilige Steuereinheit 22, 24 ordnungsgemäß arbeitet.

Sofern kein Fehlerfall vorliegt, wird in einem dritten Arbeitsschritt 40 mittels der zweiten Steuereinheit 24 das zweite Sensorsignal und des vierte Sensorsignal an die erste Steuereinheit 22 geleitet. Hierfür wird eine Durchleitungseinheit 42 herangezogen, die als ASIC ausgeführt ist. Somit stehen sämtliche vier Sensorsignale in der ersten Steuereinheit 22 zur Verfügung.

In einem sich anschließenden vierte Arbeitsschritt 44 wird mittels der ersten Steuereinheit 22 aus dem ersten Sensorsignal ein Radschlupf des ersten Rads 4 und aus dem zweiten Sensorsignal ein Radschlupf des zweiten Rads 6 sowie aus dem dritten Sensorsignal ein Radschlupf des dritten Rads 8 als auch aus dem vierten Sensorsignal ein Radschlupf des vierten Rads 10 bestimmt. Dabei wird mittels der gemessenen Sensorsignale im Wesentlichen eine direkte Bestimmung des jeweiligen Radschlupfs durchgeführt. Mit anderen Worten werden die entsprechenden Sensorsignale geeignet ausgewertet und der jeweilige Radschlupf hieraus abgelesen.

In einem sich anschließenden fünften Arbeitsschritt 46 wird anhand des Radschlupfs des ersten Rads 4 ein erstes Bremssignal für das erste Rad 4 und anhand des Radschlupfs des zweiten Rads 6 ein zweites Bremssignal für das zweite Rad 6 sowie anhand des Radschlupfs des dritten Rads 8 ein dritte Bremssignal für das dritte Rad 8 als auch anhand des Radschlupfs des vierten Rads 10 ein Bremssignal für das vierte Rad 10 erstellt. Beispielsweise werden bereits vorher bestehende Bremssignale modifiziert, oder die jeweiligen Bremssignale werden neu erstellt. Im Anschluss hieran erfolgt eine Ansteuerung jeder der Bremsen 18 mit dem jeweiligen Bremssignal. Hierbei wird, insbesondere sofern eine Blockierung des jeweiligen Rads 4, 6, 8, 10, vorhanden ist, die jeweilige Bremse 18 gelöst, sodass die Blockierung aufgehoben wird.

Falls ein Fehlerfall der ersten Steuereinheit 22 vorliegt, ist eine Bestimmung der Radschlupf mittels der ersten Steuereinheit 22 nicht mehr ermöglicht. In diesem Fall wird nach dem zweiten Arbeitsschritt 38 ein sechster Arbeitsschritt 48 durchgeführt und mittels der zweiten Steuereinheit 24 aus dem zweiten Sensorsignal der Radschlupf des zweiten Rads 6 und aus dem vierten Sensorsignal der Radschlupf des vierten Rads 10 bestimmt. Hierfür werden die jeweiligen direkt gemessenen Sensorsignale herangezogen. Ferner wird in einem siebten Arbeitsschritt 50 eine Gierrate des Kraftfahrzeugs 2 erfasst. Dies entspricht im Wesentlichen eine Bewegung des Kraftfahrzeugs 2 senkrecht zu dessen Ausrichtung. Hierfür wird ein geeigneter Beschleunigungssensor verwendet. Auch wird ein Lenkwinkels 54 des Kraftfahrzeugs 2 erfasst. Zudem wird eine Radaufstandskraft, also eine Radlast, des ersten Rads 4 sowie des dritten Rads 8 erfasst. Hierfür wird ein geeigneter Sensor, insbesondere ein Beschleunigungssensor, herangezogen.

Mittels eines Kennfelds 56, das in der zweite Steuereinheit 24 hinterlegt ist, wird anhand des zweiten Sensorsignals und des vierten Sensorsignals der Radschlupf des ersten Rads 4 sowie der Radschlupf des dritten Rads 8 ermittelt. In dem Kennfeld 56 der zweiten Steuereinheit 24 ist der Radschlupf des ersten Rads 4 in Abhängigkeit dessen Radaufstandskraft, der Gierrate sowie des Lenkwinkels 54 und des zweiten sowie vierten Sensorsignal hinterlegt. Auch ist der Radschlupf des dritten Rads 8 in Abhängigkeit dessen Radaufstandskraft, der Gierrate sowie des Lenkwinkels 54 als auch in Abhängigkeit des zweiten sowie vierten Sensorsignals hinterlegt. Somit sind wiederum nach dem siebten Arbeitsschritt 50 wiederum die Radschlupfe für sämtliche Räder 4,6, 8,10 bekannt, wobei zwei der Radschlupfe, nämlich die des zweiten Rads 6 und des vierte Rads 10, direkt gemessen sind, und wobei zwei der Radschlupfe, nämlich die des ersten Rads 4 und des zweiten Rads 8 anhand des Kennfelds 56 ermittelt sind. Im Anschluss hieran wird der fünfte Arbeitsschritt 46 ausgeführt und die Bremssignale erstellt sowie die Bremsen 18 geeignet angesteuert.

Sofern ein Fehlerfall der zweiten Steuereinheit 24 vorliegt, wird im Anschluss an den zweiten Arbeitsschritt 38 ein achter Arbeitsschritt 58 ausgeführt und aus dem ersten Sensorsignal der Radschlupf des ersten Rads 4 sowie aus dem dritten Sensorsignal der Radschlupf des dritten Rads 8 mittels der ersten Steuereinheit 22 bestimmt. Zudem wird ein neunter Arbeitsschritt 60 ausgeführt, und anhand des ersten Sensorsignals und des dritten Sensorsignals der Radschlupf des zweiten Rads 6 ermittelt, wofür ein Kennfeld 62 der ersten Steuereinheit 22 herangezogen wird. In dem Kennfeld 62 der ersten Steuereinheit 22 ist der Radschlupf des zweiten Rads 6 in Abhängigkeit der Gierrate 52, des Lenkwinkels 54, der Radaufstandskraft des zweiten Rads 6 sowie des erste Sensorsignals und des dritten Sensorsignal hinterlegt. Zudem wird der Radschlupf des vierten Rads 10 mittels des Kennfelds 62 der ersten Steuereinheit 22 ermittelt, in dem zusätzlich der Radschlupf des vierten Rads 10 in Abhängigkeit der Gierrate 52, des Lenkwinkels 54, der Radaufstandskraft des vierten Rads 4, also der Radlast des vierten Rads, sowie des ersten und des dritten Sensorsignal hinterlegt ist. Somit sind wiederum die Radschlupfe für sämtliche Räder 4, 6, 8, 10 bekannt. Im Anschluss hieran wird der dritte Arbeitsschritt 40 ausgeführt und die Bremssignale zur Ansteuerung der jeweiligen Bremse 18 erstellt als auch die Bremsen 18 entsprechend angesteuert.

In Figur 3 ist eine Abwandlung des Kraftfahrzeugs 2 gezeigt, wobei das Assistenzsystem 20 abgeändert ist. Als Unterschied sind das erste Rad 4 sowie das dritte Rad 8 einer Fahrerseite 64 des Kraftfahrzeugs 2 zugeordnet. Somit sind auch der erste Drehzahlsensor 26 sowie der dritte Drehzahlsensor 28 der Fahrerseite 64 zugeordnet. Das zweite Rad 6 und das vierte Rad 10 sowie der zweite Drehzahlsensor 30 als auch der vierte Drehzahlsensor 34 sind einer Beifahrerseite 66 des Kraftfahrzeugs 2 zugeordnet. Bei Betrieb wird hierbei ebenfalls das Verfahren 34 durchgeführt. In einer nicht näher dargestellten Ausgestaltungsform ist das erste Rad 4 der Fahrerseite 64 sowie der Vorderachse 12 und das dritte Rad 8 der Beifahrerseite 66 sowie der Hinterachse 14 zugeordnet, wobei die Drehzahlsensoren 26, 28, 30, 32 entsprechend angeordnet sind.

Zusammenfassend sind die Drehzahlsensoren 26, 28 30, 32, also die Raddrehzahlsensoren, jeweils paarweise an eine der Steuereinheiten 20, 24 angeschlossen. So sind insbesondere die der Vorderachse 12 zugeordneten Drehzahlsensoren 26, 28 an der ersten Steuereinheit 22 angeschlossen, und die der Hinterachse 14 zugeordneten Drehzahlsensoren 30, 32 sind an die zweite Steuereinheit 24 angeschlossen. Im fehlerfreien Zustand werden die Sensorsignale durch die zweite Steuereinheit 24 an die erste Steuereinheit 22 weitergeleitet, wofür insbesondere eine als ASIC ausgestaltete Weiterleitungsschaltung, also als Durchleitungseinheit 42, herangezogen wird. Somit verfügt die erste Steuereinheit 22 über alle vier Sensorsignale.

Im Fehlerfall stehen jedoch nicht mehr sämtliche Sensorsignale zur Verfügung. Bei Ausfall der zweiten Steuereinheit 24 stehen in der ersten Steuereinheit 22 lediglich das erste und das dritte Sensorsignal, also die Raddrehzahlsignale der Vorderachse 12, zur Verfügung. Die Radschlupfregelung der Vorderachse 12 erfolgt hierbei anhand der Raddrehzahlsignale der Vorderachse 12, also des ersten bzw. des dritten Sensorsignals. Mit anderen Worten wird der Radschlupf des ersten Rads 4 und des dritten Rads 8 bestimmt. Der Radschlupf an der Hinterachse 14, also der des zweiten Rads 6 sowie des vierten Rads 10, wird anhand des Radschlupfs der Vorderachse 12, insbesondere anhand des ersten sowie des dritten Sensorsignal, der jeweiligen Radaufstandskraft der Hinterachse 14, also der Radlast des zweiten sowie des vierten Rads 6, 10, als auch anhand weiterer Fahrzeuggeometriedaten, wie insbesondere der Gierrate 52 und des Lenkwinkels 54, ermittelt, wofür das Kennfeld 62 herangezogen wird. Entsprechend erfolgen eine Erstellung der Bremssignale und eine Regelung der Bremse 18.

Bei einem Ausfall der erste Steuereinheit 22 und somit einem Ausfall der Sensorsignale der Vorderachse 12, erfolgt die Radschlupfregelung, also insbesondere die Ermittlung des Radschlupfs des ersten Rads 4 sowie des dritten Rads 8 entsprechend. Aufgrund des Verfahrens 34 ist eine redundante Radschlupfregelung mittels der Steuereinheiten 22, 24 mit entsprechender Leistung (Performance) und Längsstabilität bereitgestellt, wobei Herstellungskosten reduziert sind. In einer weiteren Alternativen ist der erste Drehzahlsensor 26 der Vorderachse 12 sowie der Fahrerseite 64 stets zugeordnet, wobei der dritte Drehzahlsensor 28 beispielsweise ebenfalls der Fahrerseite 64 oder der Beifahrerseite 26, jedoch der Hinterachse 14 zugeordnet ist.

### BEZUGSZEICHENLISTE:

- 2: Kraftfahrzeug
- 4: erstes Rad
- 6: zweites Rad
- 8: drittes Rad
- 10: viertes Rad
- 12: Vorderachse
- 14: Hinterachse
- 16: Bremssystem
- 18: Bremse
- 20: Assistenzsystem
- 22: erste Steuereinheit
- 24: zweite Steuereinheit
- 26: erster Drehzahlsensor
- 28: dritter Drehzahlsensor
- 30: zweiter Drehzahlsensor
- 32: vierter Drehzahlsensor
- 34: Verfahren
- 36: erster Arbeitsschritt
- 38: zweiter Arbeitsschritt
- 40: dritter Arbeitsschritt
- 42: Durchleitungseinheit
- 44: vierter Arbeitsschritt
- 46: fünfter Arbeitsschritt
- 48: sechster Arbeitsschritt
- 50: siebter Arbeitsschritt
- 52: Gierrate
- 54: Lenkwinkel
- 56: Kennfeld der zweiten Steuereinheit
- 58: achter Arbeitsschritt
- 60: neunter Arbeitsschritt
- 62: Kennfeld der ersten Steuereinheit
- 64: Fahrerseite
- 66: Beifahrerseite

## Patentansprüche

1. Verfahren (34) zum Betrieb eines Assistenzsystems (20) eines Kraftfahrzeugs (2), mit einer ersten Steuereinheit (22), und mit einer zweiten Steuereinheit (24), wobei ein erster Drehzahlsensor (26) zur Erfassung einer Drehzahl eines ersten Rads (4) an die erste Steuereinheit (22) angeschlossen ist, wobei ein zweiter Drehzahlsensor (30) zur Erfassung einer Drehzahl eines zweiten Rads (6) an die zweite Steuereinheit (24) angeschlossen ist, und wobei die erste Steuereinheit (22) signaltechnisch mit der zweiten Steuereinheit (24) gekoppelt ist, bei dem
- mittels des ersten Drehzahlsensors (26) ein erstes Sensorsignal und mittels des zweiten Drehzahlsensors (30) ein zweites Sensorsignal erstellt wird,
- bestimmt wird, ob ein Fehlerfall der ersten Steuereinheit (22) oder der zweiten Steuereinheit (24) vorliegt,
- dann, wenn kein Fehlerfall vorliegt, mittels der zweiten Steuereinheit (24) das zweite Sensorsignal an die erste Steuereinheit (22) geleitet wird, und mittels der ersten Steuereinheit (22) aus dem ersten Sensorsignal ein Radschlupf des ersten Rads (4) und aus dem zweiten Sensorsignal ein Radschlupf des zweiten Rads (6) bestimmt wird,
- **dadurch gekennzeichnet, dass** wenn ein Fehlerfall der ersten Steuereinheit (22) vorliegt, mittels der zweiten Steuereinheit (24) der Radschlupf des ersten Rads (4) anhand des zweiten Sensorsignals, nämlich eines funktionalen Zusammenhangs mit dem zweiten Sensorsignal, ermittelt und aus dem zweiten Sensorsignal der Radschlupf des zweiten Rads (6) bestimmt wird,
- und, wenn ein Fehlerfall der zweiten Steuereinheit (24) vorliegt, mittels der ersten Steuereinheit (22) aus dem ersten Sensorsignal der Radschlupf des ersten Rads (4) bestimmt und der Radschlupf des zweiten Rads (6) anhand des ersten Sensorsignals, nämlich eines funktionalen Zusammenhangs mit dem ersten Sensorsignal, ermittelt wird.

2. Verfahren (34) nach Anspruch 1, **dadurch gekennzeichnet, dass** die Ermittlung des Radschlupfs anhand eines Kennfelds (56, 62) erfolgt.

3. Verfahren (34) nach Anspruch 1 oder 2, **dadurch gekennzeichnet, dass** die Ermittlung des Radschlupfs anhand einer Radaufstandskraft erfolgt.

4. Verfahren (34) nach einem der Ansprüche 1 bis 3, **dadurch gekennzeichnet, dass** die Ermittlung des Radschlupfs in Abhängigkeit einer Gierrate (52) und/oder eines Lenkwinkels (54) erfolgt.

5. Verfahren (34) nach einem der Ansprüche 1 bis 4, **dadurch gekennzeichnet, dass** anhand des Radschlupfs des ersten Rads (4) ein erstes Bremssignal für das erste Rad (4) und anhand des Radschlupfs des zweiten Rads (6) ein zweites Bremssignal für das zweite Rad (6) erstellt wird.

6. Verfahren (34) nach einem der Ansprüche 1 bis 5, **dadurch gekennzeichnet, dass** ein dritter Drehzahlsensor (18) zur Erfassung einer Drehzahl eines dritten Rads (8) an die erste Steuereinheit (22) angeschlossen ist, und dass ein vierter Drehzahlsensor (32) zur Erfassung einer Drehzahl eines vierten Rads (10) an die zweite Steuereinheit (24) angeschlossen ist, und dass ein Radschlupf des dritten Rads (8) und ein Radschlupf des vierten Rads (10) erstellt wird.

7. Assistenzsystem (20) eines Kraftfahrzeugs (2), mit einer ersten Steuereinheit (22), und mit einer zweiten Steuereinheit (24), wobei ein erster Drehzahlsensor (26) zur Erfassung einer Drehzahl eines ersten Rads (4) an die erste Steuereinheit (22) angeschlossen ist, wobei ein zweiter Drehzahlsensor (30) zur Erfassung einer Drehzahl eines zweiten Rads (6) an die zweite Steuereinheit (24) angeschlossen ist, und wobei die erste Steuereinheit (22) signaltechnisch mit der zweiten Steuereinheit (24) gekoppelt ist, welches gemäß einem Verfahren (34) nach einem der Ansprüche 1 bis 6 betrieben ist.

8. Assistenzsystem (20) nach Anspruch 7, **dadurch gekennzeichnet, dass** ein dritter Drehzahlsensor (28) zur Erfassung einer Drehzahl eines dritten Rads (8) an die erste Steuereinheit (22) angeschlossen ist, und dass ein vierter Drehzahlsensor (32) zur Erfassung einer Drehzahl eines vierten Rads (10) an die zweite Steuereinheit (24) angeschlossen ist.

9. Assistenzsystem (20) nach Anspruch 8, **dadurch gekennzeichnet, dass** der erste Drehzahlsensor (26) und der dritte Drehzahlsensor (28) einer gemeinsamen Achse (12) des Kraftfahrzeugs (2) zugeordnet sind.

10. Assistenzsystem (20) nach Anspruch 8, **dadurch gekennzeichnet, dass** der erste Drehzahlsensor (26) und der dritte Drehzahlsensor (28) einer gemeinsamen Seite (64) des Kraftfahrzeugs (2) zugeordnet sind.

11. Kraftfahrzeug (2) mit einem Assistenzsystem (20) nach einem der Ansprüche 7 bis 10.

## Claims

1. Method (34) for operating an assistance system (20) of a motor vehicle (2), having a first control unit (22) and a second control unit (24), wherein a first speed sensor (26) for detecting a speed of a first wheel (4) is connected to the first control unit (22), wherein a second speed sensor (30) for detecting a speed of a second wheel (6) is connected to the second control unit (24), and wherein the first control unit (22) is coupled by signal technology to the second control unit (24), wherein
- by means of the first speed sensor (26) a first sensor signal is generated and by means of the second speed sensor (30) a second sensor signal is generated,
- it is determined whether there is fault in the first control unit (22) or the second control unit (24),
- then, if there is no fault, the second sensor signal is sent to the first control unit (22) by means of the second control unit (24), and by means of the first control unit (22) a wheel slip of the first wheel (4) is determined from the first sensor signal, and a wheel slip of the second wheel (6) is determined from the second sensor signal,
- **characterised in that** in the event of a fault in the first control unit (22), by means of the second control unit (24) the wheel slip of the first wheel (4) is determined by means of the second sensor signal, namely a functional correlation with the second sensor signal, and the wheel slip of the second wheel (6) is determined from the second sensor signal,
- and, in the event of a fault in the second control unit (24), by means of the first control unit (22) the wheel slip of the first wheel (4) is determined from the first sensor signal and the wheel slip of the second wheel (6) is determined on the basis of the first sensor signal, namely a functional correlation with the first sensor signal.

2. Method (34) according to claim 1, **characterised in that** the wheel slip is determined on the basis of a characteristic diagram (56, 62).

3. Method (34) according to claim 1 or 2, **characterised in that** the wheel slip is determined on the basis of a wheel contact force.

4. Method (34) according to any of claims 1 to 3, **characterised in that** the wheel slip is determined as a function of a yaw rate (52) and/or a steering angle (54).

5. Method (34) according to any of claims 1 to 4, **characterised in that** a first brake signal for the first wheel (4) is generated on the basis of the wheel slip of the first wheel (4) and a second brake signal for the second wheel (6) is generated on the basis of the wheel slip of the second wheel (6).

6. Method (34) according to any of claims 1 to 5, **characterised in that** a third speed sensor (18) for detecting a speed of a third wheel (8) is connected to the first control unit (22) and **in that** a fourth speed sensor (32) for detecting a speed of a fourth wheel (10) is connected to the second control unit (24) and **in that** a wheel slip of the third wheel (8) and a wheel slip of the fourth wheel (10) is established.

7. Assistance system (20) of a motor vehicle (2) having a first control unit (22) and a second control unit (24), wherein a first speed sensor (26) for detecting a speed of a first wheel (4) is connected to the first control unit (22), wherein a second speed sensor (30) for detecting a speed of a second wheel (6) is connected to the second control unit (24) and wherein the first control unit (22) is coupled by signal technology to the second control unit (24) which is operated by a method (34) according to any of claims 1 to 6.

8. Assistance system (20) according to claim 7, **characterised in that** a third speed sensor (28) for detecting a speed of a third wheel (8) is connected to the first control unit (22), and **in that** a fourth speed sensor (32) for detecting a speed of a fourth wheel (10) is connected to the second control unit (24).

9. Assistance system (20) according to claim 8, **characterised in that** the first speed sensor (26) and the third speed sensor (28) are assigned to a common axle (12) of the motor vehicle (2).

10. Assistance system (20) according to claim 8, **characterised in that** the first speed sensor (26) and the third speed sensor (28) are assigned to a common side (64) of the motor vehicle (2).

11. Motor vehicle (2) with an assistance system (20) according to any of claims 7 to 10.

## Revendications

1. Procédé (34) pour le fonctionnement d'un système d'assistance (20) d'un véhicule automobile (2), avec un premier dispositif de commande (22), et avec un second dispositif de commande (24), dans lequel un premier capteur de vitesse de rotation (26) est raccordé pour la détection d'une vitesse de rotation d'une première roue (4) au premier dispositif de commande (22), dans lequel un deuxième capteur de vitesse de rotation (30) est raccordé pour la détection d'une vitesse de rotation d'une seconde roue (6) au second dispositif de commande (24), et dans lequel le premier dispositif de commande (22) est couplé en signal au second dispositif de commande (24), pour lequel
- au moyen du premier capteur de vitesse de rotation (26), un premier signal de capteur est établi et au moyen du deuxième capteur de vitesse de rotation (30), un second signal de capteur est établi,
- il est déterminé si un cas de défaut du premier dispositif de commande (22) ou du second dispositif de commande (24) se présente,
- alors si aucun cas de défaut ne se présente, au moyen du second dispositif de commande (24), le second signal de capteur est transmis au premier dispositif de commande (22), et au moyen du premier dispositif de commande (22), à partir du premier signal de capteur un patinage de roue de la première roue (4) est déterminé et à partir du second signal de capteur un patinage de roue de la seconde roue (6) est déterminé,
- **caractérisé en ce que** si un cas de défaut du premier dispositif de commande (22) se présente, au moyen du second dispositif de commande (24) le patinage de roue de la première roue (4) est calculé à l'aide du second signal de capteur, à savoir d'un rapport fonctionnel avec le second signal de capteur, et à partir du second signal de capteur le patinage de roue de la seconde roue (6) est déterminé.
- et, si un cas de défaut du second dispositif de commande (24) se présente, au moyen du premier dispositif de commande (22), le patinage de roue de la première roue (4) est déterminé à partir du premier signal de capteur et le patinage de roue de la seconde roue (6) est calculé à l'aide du premier signal de capteur, à savoir d'un rapport fonctionnel avec le premier signal de capteur.

2. Procédé (34) selon la revendication 1, **caractérisé en ce que** le calcul du patinage de roue est effectué à l'aide d'un champ caractéristique (56, 62).

3. Procédé (34) selon la revendication 1 ou 2, **caractérisé en ce que** le calcul du patinage de roue est effectué à l'aide d'une force d'appui de roue.

4. Procédé (34) selon l'une quelconque des revendications 1 à 3, **caractérisé en ce que** le calcul du patinage de roue est effectué en fonction d'un taux de lacet (52) et/ou d'un angle de braquage (54).

5. Procédé (34) selon l'une quelconque des revendications 1 à 4, **caractérisé en ce qu'**à l'aide du patinage de roue de la première roue (4), un premier signal de freinage pour la première roue (4) est établi et à l'aide du patinage de roue de la deuxième roue (6), un second signal de freinage pour la deuxième roue (6) est établi.

6. Procédé (34) selon l'une quelconque des revendications 1 à 5, **caractérisé en ce qu'**un troisième capteur de vitesse de rotation (18) est raccordé pour la détection d'une vitesse de rotation d'une troisième roue (8) au premier dispositif de commande (22), et qu'un quatrième capteur de vitesse de rotation (32) est raccordé pour la détection d'une vitesse de rotation d'une quatrième roue (10) au second dispositif de commande (24), et qu'un patinage de roue de la troisième roue (8) et un patinage de roue de la quatrième roue (10) sont établis.

7. Système d'assistance (20) d'un véhicule automobile (2), avec une première unité de commande (22), et avec une seconde unité de commande (24), dans lequel un premier capteur de vitesse de rotation (26) est raccordé pour la détection d'une vitesse de rotation d'une première roue (4) au premier dispositif de commande (22), dans lequel un deuxième capteur de vitesse de rotation (30) est raccordé pour la détection d'une vitesse de rotation d'une deuxième roue (6) au second dispositif de commande (24), et dans lequel la première unité de commande (22) est couplée en signal au second dispositif de commande (24), lequel est en fonctionnement selon un procédé (34) selon l'une quelconque des revendications 1 à 6.

8. Système d'assistance (20) selon la revendication 7, **caractérisé en ce qu'**un troisième capteur de vitesse de rotation (28) est raccordé pour la détection d'une vitesse de rotation d'une troisième roue (8) au premier dispositif de commande (22), et qu'un quatrième capteur de vitesse de rotation (32) est raccordé pour la détection d'une vitesse de rotation d'une quatrième roue (10) au second dispositif de commande (24).

9. Système d'assistance (20) selon la revendication 8, **caractérisé en ce que** le premier capteur de vitesse de rotation (26) et le troisième capteur de vitesse de rotation (28) sont associés à un essieu commun (12) du véhicule automobile (2).

10. Système d'assistance (20) selon la revendication 8, **caractérisé en ce que** le premier capteur de vitesse de rotation (26) et le troisième capteur de vitesse de rotation (28) sont associés à un côté commun (64) du véhicule automobile.

11. Véhicule automobile (2) avec un système d'assistance (20) selon l'une quelconque des revendications 7 à 10.
